(19)

Europäisches Patentamt
European Patent Office
Office européen des brevets

(11) **EP 4 462 453 A1**

(12) **EUROPEAN PATENT APPLICATION**
published in accordance with Art. 153(4) EPC

(43) Date of publication:
**13.11.2024  Bulletin 2024/46**

(21) Application number: **22918864.4**

(22) Date of filing: **23.12.2022**

(51) International Patent Classification (IPC):
$H01B\ 13/00^{(2006.01)}$    $C01B\ 25/14^{(2006.01)}$
$C01D\ 15/00^{(2006.01)}$    $H01G\ 11/56^{(2013.01)}$
$H01M\ 10/0562^{(2010.01)}$

(52) Cooperative Patent Classification (CPC):
**C01B 25/14; C01D 15/00; H01B 13/00;**
**H01G 11/56; H01M 10/0562;** Y02E 60/10

(86) International application number:
**PCT/JP2022/047740**

(87) International publication number:
**WO 2023/132280 (13.07.2023 Gazette 2023/28)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **05.01.2022  JP 2022000675**

(71) Applicant: **Idemitsu Kosan Co.,Ltd.**
**Tokyo 100-8321 (JP)**

(72) Inventor: **KAMBARA, Takayoshi**
**Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SULFIDE SOLID ELECTROLYTE**

(57)    Provided is a method for producing a sulfide solid electrolyte having an argyrodite-type crystal structure in a liquid phase, the method having a production efficiency enhanced by efficiently using a raw material-containing substance and enabling easy production of a high-quality sulfide solid electrolyte, the method including mixing a raw material-containing substance and a first solvent to prepare a mixture, mixing the mixture and a second solvent to prepare a solution containing a solid electrolyte precursor, subjecting the solid electrolyte precursor to a heat treatment while supplying hydrogen sulfide to produce a heated solid electrolyte precursor, and firing the heated solid electrolyte precursor.

[Fig. 1]

EP 4 462 453 A1

**Description**

Technical Field

The present invention relates to a method for producing a sulfide solid electrolyte.

Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of all-solid-state batteries having a solid electrolyte layer in place of an electrolytic solution is being made in view of the fact that by making the battery fully solid, simplification of a safety unit may be realized without using a flammable organic solvent within the battery so that the battery is excellent in manufacturing costs and productivity. In addition, with spread of solid electrolytes, a technique for manufacturing a solid electrolyte having a higher quality in a more efficient manner is being focused on.

Production methods of a solid electrolyte are roughly classified into solid-phase methods and liquid-phase methods. Recently, toward practical use of all-solid-state batteries, liquid-phase methods have come to draw attention not only due to its versatility and applicability but also as a method capable of mass-producing solid electrolytes in a simplified manner. The liquid-phase methods include a homogeneous method using a solution of solid electrolyte raw materials and a heterogeneous method using a suspension (slurry) in which solid electrolyte raw materials are not completely dissolved but solid and liquid coexist.

In a liquid-phase method, for example, a complexing agent solution (or slurry) of solid electrolyte raw materials is prepared, the solution is dried to give a complex crystal, and then, the resulting complex crystal is fired to give a solid electrolyte of a different crystal (see PTL 1). PTL 2 discloses a method for producing a sulfide solid electrolyte in which a raw material-containing solution containing raw materials and a solvent is supplied to another medium kept at a higher temperature than that of the solvent to volatilize the solvent and to allow the raw materials to react, thus precipitating an argyrodite-type crystal structure.

Citation List

Patent Literature

   PTL 1: WO 2018/054709

   PTL 2: JP 2019-169459 A

Summary of Invention

Technical Problem

The present invention has been made in consideration of the situation as above, and has an object to provide a method for producing a sulfide solid electrolyte having an argyrodite-type crystal structure in a liquid phase, the method having a production efficiency enhanced by efficiently using a raw material-containing substance and enabling easy production of a high-quality sulfide solid electrolyte.

Solution to Problem

A method for producing a sulfide solid electrolyte according to the present invention is a method for producing a sulfide solid electrolyte having an argyrodite-type crystal structure, the method including

   mixing a raw material-containing substance and a first solvent to prepare a mixture,
   mixing the mixture and a second solvent to prepare a solution containing a solid electrolyte precursor,
   subjecting the solid electrolyte precursor to a heat treatment while supplying hydrogen sulfide to produce a heated solid electrolyte precursor, and
   firing the heated solid electrolyte precursor.

Advantageous Effects of Invention

According to the present invention, it is possible to provide a method for producing a sulfide solid electrolyte having an argyrodite-type crystal structure in a liquid phase, the method having a production efficiency enhanced by efficiently using a raw material-containing substance and enabling easy production of a high-quality sulfide solid electrolyte.

Brief Description of Drawings

Fig. 1 shows an X-ray diffraction spectrum of a sulfide solid electrolyte obtained in Example 1.
Fig. 2 shows an X-ray diffraction spectrum of a sulfide solid electrolyte obtained in Comparative Example 1.
Fig. 3 shows an X-ray diffraction spectrum of a sulfide solid electrolyte obtained in Example 2.
Fig. 4 shows an X-ray diffraction spectrum of a sulfide solid electrolyte obtained in Example 3.

Description of Embodiments

An embodiment of the present invention (hereinafter sometimes referred to as "this embodiment") will be described below. In this description, numerical values as an upper limit and a lower limit in numerical value ranges of "or more", "or less", and "XX to YY" are numerical values which can be arbitrarily combined, and numerical values in the section of Examples can also be used as numerical values of an upper limit and a lower limit.

(Findings that the inventor has acquired to reach the present invention)

As a result of intensive and extensive studies for solving the above problem, the present inventors have found the following items, thus completing the present invention.

As described in PTLs 1 and 2, studies of sulfide solid electrolytes having various compositions have proceeded. In recent years, sulfide solid electrolytes have spread, for example, application thereof in vehicles has studied, and thus, there has been a growing need for sulfide solid electrolytes having higher quality. Thus, in addition to a need for an enhancement in the quality of the sulfide solid electrolyte which has been heretofore studied, there is an increasing need for a method for more easily producing such a high-quality sulfide solid electrolyte.

In the production method (liquid phase method) described in PTL 1, two or more raw materials are used, and thus, it has been difficult to achieve the synthesis without causing separation of the raw materials in the complexing agent solution or slurry. Hence, a part of the raw materials does not contribute to a reaction, thereby reducing the ionic conductivity of the solid electrolyte in some cases.

The production method described in PTL 2 is also according to a liquid phase method, and ethanol is supposed as one of solvents used for preparation of a raw material-containing substance. An alcohol solvent, such as ethanol, has disadvantages while having the advantage that a reaction of raw materials easily proceeds.

For example, the following fact has been found: a part of a raw material does not contribute to production of the solid electrolyte, and thus, the production efficiency may decrease. Regarding lithium sulfide ($Li_2S$) which is generally used as a raw material of a solid electrolyte, a part thereof reacts with an alcohol solvent, such as ethanol, to produce a lithium alkoxide, such as lithium ethoxide, and does not contribute to a reaction with a raw material, such as a phosphorus sulfide (for example, diphosphorus pentasulfide ($P_2S_5$)) which is generally used together with lithium sulfide ($Li_2S$), and in addition, is likely to remain as an impurity, which causes a decrease in the purity of the sulfide solid electrolyte, resulting in a deterioration in quality, for example, a decrease in the ionic conductivity. In addition, a phosphorus sulfide (for example, diphosphorus pentasulfide ($P_2S_5$)), which dissolves in an alcohol solvent, such as ethanol, hardly contribute to a reaction with another raw material, such as lithium sulfide ($Li_2S$), when once dissolves.

As described above, when an alcohol solvent is used, since a part of a raw material does not contribute to a reaction, it has been difficult to achieve a superior production efficiency. The production method described in PTL 2 has the disadvantage that the raw materials to be used are restricted for enhancing the production efficiency, like in the case where $Li_3PS_4$ is to be used as a raw material when using ethanol.

Although use of other solvents is also examined in PTL 2, various operations are needed in producing a raw material-containing substance. For example, when using tetrahydrofuran, elemental sulfur is to be used as a dissolution aid, and when using dehydrated pyridine, heat is to be applied for allowing the reaction to proceed, dehydrated pyridine is to be further added for adjusting the viscosity, and furthermore, hydrogen sulfide is to be blown.

The production methods by a liquid phase method described in PTLs 1 and 2 are said to be a production method superior in the efficiency in that a solid electrolyte can be produced by supplying a raw material-containing liquid to a medium. However, a part of a raw material is lost depending on the solvent used, resulting in a reduction in the production efficiency, or raw materials are restricted depending on the solvent used, or the required operation depends on the solvent used, resulting in cumbersome operation. Thus, in a method for producing a solid electrolyte by allowing raw materials to react in a liquid phase containing ethanol or other solvents, there is a room for further improvement in points of production efficiency, versatility, and the like.

As described above, in a production method of a solid electrolyte by a liquid phase method, the fact that a part of a raw material does not contribute to a reaction due to separation or loss thereof has been a factor that causes a problem in that the production efficiency is reduced or a high-quality solid electrolyte cannot be obtained. As a result of further study about this problem, it has been found that halogen atom-containing raw materials used for production of a solid electrolyte or the like having an argyrodite-type crystal structure, for example, raw materials, such as lithium bromide, lithium iodide, and lithium chloride, are likely to cause such separation and loss as described above.

Thus, in the study about a solvent used in a production method of a solid electrolyte by a liquid phase method, the present inventor has focused on the affinity for raw materials used for producing a solid electrolyte, and has studied on whether separation and loss of a part of the raw materials can be suppressed.

Then, the present inventor has found that, by separately using a solvent that dissolves a raw material and a solvent that does not dissolve the raw material in an appropriate manner, a high-quality solid electrolyte can be obtained while eliminating the problem in use of a liquid phase method, that is, the problem in that a part of a raw material is separated and lost so as not to contribute to the reaction, resulting in a reduction in the production efficiency.

In this description, the "solid electrolyte" means an electrolyte that maintains a solid form at 25°C under a nitrogen atmosphere. The "sulfide solid electrolyte" in this embodiment is a solid electrolyte that contains a lithium atom, a sulfur atom, a phosphorus atom, and at least one halogen atom selected from a chlorine atom and a bromine atom and that has an ionic conductivity attributable to the lithium atom.

The "sulfide solid electrolyte" includes both a crystalline sulfide solid electrolyte having a crystal structure and an amorphous sulfide solid electrolyte. In this description, the crystalline sulfide solid electrolyte is a solid electrolyte in which peaks derived from a solid electrolyte are observed in an X-ray diffraction pattern of a powdery X-ray diffraction (XRD) measurement, regardless of the presence or absence of a peak derived from a raw material of the solid electrolyte therein. In other words, the crystalline sulfide solid electrolyte contains a crystal structure derived from a solid electrolyte regardless of whether a part thereof is the crystal structure derived from a solid electrolyte or all thereof is the crystal structure derived from a solid electrolyte. In addition, the crystalline sulfide solid electrolyte may partially contain an amorphous sulfide solid electrolyte (also referred to as "glass component") as long as it has such an X-ray diffraction pattern as described above. Accordingly, the crystalline sulfide solid electrolyte encompasses a so-called glass ceramic which is obtained by heating an amorphous solid electrolyte (glass component) to a crystallization temperature or higher.

In addition, in this description, the amorphous sulfide solid electrolyte (glass component) means a sulfide solid electrolyte that gives, in a powdery X-ray diffraction (XRD) measurement, an X-ray diffraction pattern of a halo pattern in which substantially no peak other than peaks derived from the materials is observed, regardless of the presence or absence of a peak derived from a raw material of the solid electrolyte.

The distinguishment of crystalline or amorphous applies to any of a sulfide solid electrolyte and a modified sulfide solid electrolyte in this embodiment.

A method for producing a sulfide solid electrolyte according to a first aspect of this embodiment is a method for producing a sulfide solid electrolyte having an argyrodite-type crystal structure, the method including

mixing a raw material-containing substance and a first solvent to prepare a mixture,
mixing the mixture and a second solvent to prepare a solution containing a solid electrolyte precursor,
subjecting the solid electrolyte precursor to a heat treatment while supplying hydrogen sulfide to produce a heated solid electrolyte precursor, and
firing the heated solid electrolyte precursor.

As described above, conventional methods for producing a solid electrolyte described in PTLs 1 and 2 have a problem in that a part of a raw material used does not contribute to a reaction due to separation and loss thereof, resulting in a reduction in the production efficiency.

According to the method for producing a sulfide solid electrolyte according to the first aspect, a first solvent is firstly used to prepare a mixture with a raw material-containing substance, that is, the raw material-containing substance is not completely dissolved but is made into a mixture. Since the raw material-containing substance is not completely dissolved in the first solvent, the reaction proceeds slowly, and the solvent and a raw material or raw materials with each other form a bonding state by any force (an intermolecular force, a chemical bond, etc.). A raw material forms a moderate bonding state particularly with the solvent, and separation and loss of the raw material are suppressed.

Next, the mixture is mixed with a second solvent to thus prepare a solution containing a solid electrolyte precursor. As described above, in the mixture, raw materials contained in the raw material-containing substance are held while forming a bonding state with each other and with a solvent. When the mixture is then mixed with a second solvent, the raw materials are dissolved therein while maintaining the moderate bond with the first solvent to prepare a solution containing a solid electrolyte precursor dissolved therein. Here, since the raw materials are supplied to the second solvent in the state where the raw materials form a bonding state with each other and further form a moderate bonding state with the first solvent, the raw materials form a solid electrolyte precursor without separation and loss due to a reaction of the second solvent and a raw material, thus contributing to formation of a sulfide solid electrolyte. For example, also when a phosphorus sulfide (for example, diphosphorus pentasulfide ($P_2S_5$)) is used as a raw material as described above, dissolution and a reaction of the phosphorus sulfide and a reaction product thereof into and with the second solvent can be suppressed, and thus, the phosphorus sulfide is allowed to contribute to the formation of a sulfide solid electrolyte without separation and loss.

The solid electrolyte precursor obtained by mixing the mixture and the second solvent is obtained in such a manner that a reaction product in which raw materials contained in the mixture form a bonding state with each other and the raw materials themselves are dissolved in the second solvent, followed by a reaction thereof. By firing the solid electrolyte precursor while supplying hydrogen sulfide described later, a sulfide solid electrolyte having an argyrodite-type crystal structure is produced. Thus, the solid electrolyte precursor obtained by mixing the mixture and the second solvent is considered to have a structure that easily forms an argyrodite-type crystal structure.

The method for producing a sulfide solid electrolyte according to the first aspect further includes subjecting the solid electrolyte precursor to a heat treatment while supplying hydrogen sulfide to produce a heated solid electrolyte precursor.

As described above, since raw materials form a bonding state with each other by separately using the first solvent and the second solvent in an appropriate manner, separation and loss of the raw materials can be reduced as compared with conventional production methods, but the raw materials are sometimes present as they are. For example, in the case where lithium sulfide ($Li_2S$) is used as a raw material, the lithium sulfide ($Li_2S$), which is present as it is, produces a lithium alkoxide as described above, and thus, does not contribute to a reaction with another raw material. Then, when the lithium alkoxide remains as it is, the purity of the sulfide solid electrolyte decrease, and in addition, the lithium alkoxide is sometimes carbonized by firing and remains, resulting in deterioration in the quality, for example, reduction in the ionic conductivity. However, in the method for producing a sulfide solid electrolyte according to the first aspect, by performing a heat treatment while supplying hydrogen sulfide, the lithium alkoxide can be converted to lithium sulfide ($Li_2S$). Specifically, it is considered that reactions according to the following reaction formulae (1) to (3) occur.

$$Li_2S + EtOH \rightarrow EtOLi + LiSH \qquad (1)$$

$$2LiSH \rightarrow Li_2S + H_2S \qquad (2)$$

$$2EtOLi + H_2S \rightarrow Li_2S + 2EtOH \qquad (3)$$

The above reactions are on the assumption that lithium sulfide ($Li_2S$) is used as a raw material and ethanol (EtOH) is used as the second solvent. When the lithium sulfide ($Li_2S$) is present as it is, the lithium sulfide ($Li_2S$) reacts with ethanol to produce lithium ethoxide (LiOEt) and lithium hydrogen sulfide (LiSH) as represented by the reaction formula (1). The lithium hydrogen sulfide (LiSH) decomposes to produce lithium sulfide ($Li_2S$) and hydrogen sulfide as represented by the reaction formula (2). The lithium ethoxide (LiOEt) produced in the reaction formula (1) reacts with the hydrogen sulfide produced in the reaction formula (2) and hydrogen sulfide that is separately supplied to produce lithium sulfide ($Li_2S$) as represented by the reaction formula (3). The lithium sulfide ($Li_2S$) produced by the reaction formula (3) reacts with another raw material to form a sulfide solid electrolyte in some cases, or even if remains as it is, it does not cause a reduction in the ionic conductivity of the sulfide solid electrolyte. Thus, by performing a heat treatment while supplying hydrogen sulfide, a remaining impurity, such as a lithium alkoxide, and loss of a raw material can be suppressed to enhance the quality of the sulfide solid electrolyte.

By firing the heated solid electrolyte precursor obtained by the heat treatment, an argyrodite-type crystal structure is formed and the crystallinity is enhanced. Thus, a high-quality sulfide solid electrolyte having an argyrodite-type crystal structure is obtained.

As described above, by separately using the first solvent and the second solvent in an appropriate manner and performing a heat treatment while supplying hydrogen sulfide, followed by firing, a problem in that a part of a raw material is separated and lost to fail to contribute to a reaction, resulting in reduction in the production efficiency can be eliminated, making it possible to easily produce a high-quality sulfide solid electrolyte that has reduced impurities to have a high ionic conductivity.

A method for producing a sulfide solid electrolyte according to a second aspect of this embodiment is the method in which

the second solvent is an alcohol solvent.

When the second solvent is an alcohol solvent, separation and loss of a raw material hardly occur, and thus, a solid electrolyte precursor can be more efficiently obtained, and as a result, it is possible to enhance the production efficiency and easily produce a high-quality sulfide solid electrolyte.

A method for producing a sulfide solid electrolyte according to a third aspect of this embodiment is the method in which

the first solvent is a solvent that is different from the second solvent and that contains at least any one of an oxygen atom and a nitrogen atom.

When the first solvent is a solvent that is different from the second solvent and that contains at least any one of an oxygen atom and a nitrogen atom, raw materials moderately interact with each other to the extent that the raw materials are not dissolved in the solvent, and thus, a bonding state by any force (an intermolecular force, a chemical bond, etc.) between raw materials or between a raw material and the first solvent is liable to be formed, and the separation and loss of the raw materials can be suppressed. As a result, it is possible to enhance the production efficiency and easily produce a high-quality sulfide solid electrolyte.

A method for producing a sulfide solid electrolyte according to a fourth aspect of this embodiment is the method in which

the first solvent is at least one solvent containing an oxygen atom selected form an ester solvent, an ether solvent, an aldehyde solvent, and a ketone solvent. A method for producing a sulfide solid electrolyte according to a fifth aspect of this embodiment is the method in which
the first solvent is at least one solvent containing a nitrogen atom selected from an amine solvent, an amide solvent, a nitro solvent, and a nitrile solvent.

When the first solvent is such a solvent as described above, as described in the method for producing a sulfide solid electrolyte according to the third aspect, it is possible to enhance the production efficiency and easily produce a high-quality sulfide solid electrolyte.

A method for producing a sulfide solid electrolyte according to a sixth aspect of this embodiment is the method in which

the heat treatment is performed at 200°C or higher.

When the temperature of the heat treatment is 200°C or higher, a lithium alkoxide can be more efficiently converted to $Li_2S$ to suppress deterioration in the quality, such as a reduction in the ionic conductivity, due to the lithium alkoxide contained. In addition, a sulfide solid electrolyte having a desired argyrodite-type crystal structure that does not have a deviation in the composition involved in the loss of $Li_2S$ is easily produced, and as a result, it is possible to enhance the production efficiency and easily produce a high-quality sulfide solid electrolyte.

A method for producing a sulfide solid electrolyte according to a seventh aspect of this embodiment is the method in which

the raw material-containing substance and the first solvent are mixed by using a mixer or a stirrer. A method for producing a sulfide solid electrolyte according to an eighth aspect of this embodiment is the method in which
the mixture and the second solvent are mixed by using a mixer or a stirrer.

Since the mixing of the raw material-containing substance and the first solvent and the mixing of the mixture and the second solvent can be achieved simply by using a mixer or a stirrer, in other words, can be simply achieved without an apparatus that takes a large energy, such as a pulverizer, this method is said to be a production method superior in the production efficiency.

A method for producing a sulfide solid electrolyte according to a nineth aspect of this embodiment is the method in which

the mixture contains a reaction product of the raw material-containing substance.

A mixture is obtained by mixing the raw material-containing substance and the first solvent, and as described above, a bonding state by any force (an intermolecular force, a chemical bond, etc.) is formed between raw materials or between a raw material and the first solvent, which can be considered as the "reaction product". For example, when lithium sulfide ($Li_2S$) and a phosphorus sulfide (for example diphosphorus pentasulfide ($P_2S_5$)) are used as raw materials, a part thereof forms a reaction product, such as $Li_3PS_4$. Thus, the reaction product includes one having the nature of a solid electrolyte, such as $Li_3PS_4$.

When a reaction product in which raw materials form a bonding state with each other, such as $Li_3PS_4$, is contained in the mixture, raw materials, such as, for example, lithium sulfide ($Li_2S$) and a phosphorus sulfide (for example diphosphorus pentasulfide ($P_2S_5$)), are not separated, and thus, the separation and loss of raw materials hardly occur. In addition, a reaction product, such as $Li_3PS_4$, forms a moderate bonding state with the first solvent, thereby being protected from the second solvent, and the reaction product can form a basic structure of the sulfide solid electrolyte.

Accordingly, a sulfide solid electrolyte having an argyrodite-type crystal structure is liable to be produced. As a result, a solid electrolyte precursor is more efficiently obtained, and consequently, it is possible to enhance the production efficiency and easily produce a high-quality sulfide solid electrolyte.

A method for producing a sulfide solid electrolyte according to a tenth aspect of this embodiment is the method in which

the raw material-containing substance contains lithium sulfide. A method for producing a sulfide solid electrolyte according to an eleventh aspect of this embodiment is the method in which
the raw material-containing substance contains a phosphorus sulfide. A method for producing a sulfide solid electrolyte according to a twelfth aspect of this embodiment is the method in which
the raw material-containing substance contains a lithium halide selected from lithium chloride and lithium bromide.

These aspects define a preferred raw material in the raw material-containing substance. When using such a raw material as defined in these aspects, a sulfide solid electrolyte having an argyrodite-type crystal structure is liable to be obtained.

A method for producing a sulfide solid electrolyte according to a thirteenth aspect of this embodiment is the method in which

the first solvent is used in an amount of 100 mL or more and 1000 mL or less relative to 100 g of the raw material-containing substance. A method for producing a sulfide solid electrolyte according to a fourteenth aspect of this embodiment is the method in which
the second solvent is used in an amount of 200 mL or more and 2000 mL or less relative to 100 g of the raw material-containing substance.

When the amounts of the first solvent and the second solvent used are within the above ranges, each solvent efficiently functions, and thus, a solid electrolyte precursor is more efficiently obtained, and as a result, it is possible to enhance the production efficiency and easily produce a high-quality sulfide solid electrolyte.

The method for producing a sulfide solid electrolyte of this embodiment will be described in more detail below along the above aspects.

[Method for producing a sulfide solid electrolyte]

The method for producing a sulfide solid electrolyte of the first aspect of this embodiment is a method for producing a sulfide solid electrolyte having an argyrodite-type crystal structure, the method including

mixing a raw material-containing substance and a first solvent to prepare a mixture,
mixing the mixture and a second solvent to prepare a solution containing a solid electrolyte precursor,
subjecting the solid electrolyte precursor to a heat treatment while supplying hydrogen sulfide to produce a heated solid electrolyte precursor, and
firing the heated solid electrolyte precursor.

(Raw material-containing substance)

The raw material-containing substance used in the production method of this embodiment contains raw materials of a sulfide solid electrolyte. The sulfide solid electrolyte obtained by the production method of this embodiment is a sulfide solid electrolyte having an argyrodite-type crystal structure, and contains a lithium atom, a sulfur atom, a phosphorus atom, and a halogen atom. In other words, the raw material-containing substance substantially contains two or more raw materials each containing an atom selected from a lithium atom, a sulfur atom, a phosphorus atom, and a halogen atom.

As the halogen atom, a chlorine atom, a bromine atom, and an iodine atom are preferred, a chlorine atom and a bromine atom are more preferred, and the raw material-containing substance preferably contains at least two kinds of halogen atoms.

Preferred examples of the raw material used in the production method of this embodiment include raw materials composed of at least two kinds of atoms selected from the above four kinds of atoms, for example, lithium sulfide; lithium halides, such as lithium fluoride, lithium chloride, lithium bromide, and lithium iodide; phosphorus sulfides, such as diphosphorus trisulfide ($P_2S_3$) and diphosphorus pentasulfide ($P_2S_5$); phosphorus halides, such as various phosphorus fluorides ($PF_3$, $PF_5$), various phosphorus chlorides ($PCl_3$, $PCl_5$, $P_2Cl_4$), various phosphorus bromides ($PBr_3$, $PBr_5$), and various phosphorus iodides ($PI_3$, $P_2I_4$); and thiophosphoryl halides, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride

fluoride ($PSCl_2F$), and thiophosphoryl dibromide fluoride ($PSBr_2F$). Preferred examples of a raw material composed of one kind of atom include elemental halogens, such as fluorine ($F_2$), chlorine ($Cl_2$), bromine ($Br_2$), and iodine ($I_2$).

Examples of materials that can be used as a raw material other than the above include a raw material that contains at least one atom selected from an alkali metal, a sulfur atom, and a phosphorus atom, and preferably additionally a halogen atom, and contains an atom other than the atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfides ($SnS$, $SnS_2$), aluminum sulfide, and zinc sulfide; phosphate compounds, such as sodium phosphate and lithium phosphate; halides of alkali metals other than lithium, for example, sodium halides, such as sodium iodide, sodium fluoride, sodium chloride, and sodium bromide; metal halides, such as an aluminum halide, a silicon halide, a germanium halide, an arsenic halide, a selenium halide, a tin halide, an antimony halide, a tellurium halide, and a bismuth halide; phosphorus oxyhalides, such as phosphorus oxychloride ($POCl_3$) and phosphorus oxybromide ($POBr_3$).

In this embodiment, from the viewpoint of more easily obtaining a sulfide solid electrolyte having a high ionic conductivity, among alkali metal atoms, a lithium atom and a sodium atom are preferred, a lithium atom is more preferred, and among halogen atoms, a chlorine atom, a bromine atom, and an iodine atom are preferred, a chlorine atom and a bromine atom are more preferred. One of the atoms may be used alone or two or more thereof may be used in combination.

From the same point of view, as a compound that can be used as a raw material, among the above compounds, alkali metal sulfides, such as lithium sulfide and sodium sulfide, and phosphorus sulfides, such as diphosphorus trisulfide ($P_2S_3$) and diphosphorus pentasulfide ($P_2S_5$), are preferred.

As a compound containing a halogen atom, lithium halides, such as lithium fluoride, lithium chloride, lithium bromide, and lithium iodide; and elemental halogens, such as fluorine ($F_2$), chlorine ($Cl_2$), bromine ($Br_2$), and iodine ($I_2$), are preferred. One of the lithium halides and elemental halogens is used alone or a combination thereof is used, that is, it is preferred to use at least one selected from lithium halides and elemental halogens. When a lithium halide or an elemental halogen is used alone, or when a lithium halide and an elemental halogen are used in combination, two or more lithium halides and/or two or more elemental halogens may naturally be used.

Among alkali metal sulfides, lithium sulfide is preferred. Among phosphorus sulfides, diphosphorus pentasulfide is preferred. Among elemental halogens, chlorine ($Cl_2$), bromine ($Br_2$), and iodine ($I_2$) are preferred and chlorine ($Cl_2$) and bromine ($Br_2$) are more preferred. Among lithium halides, lithium chloride, lithium bromide, and lithium iodide are preferred and lithium chloride and lithium bromide are more preferred. When a lithium halide is used, it is particularly preferred that lithium chloride and lithium bromide are used in combination.

Preferred examples of the combination of the compounds that can be used as a raw material include a combination of lithium sulfide, diphosphorus pentasulfide, and a lithium halide, a combination of lithium sulfide, diphosphorus pentasulfide, and an elemental halogen, and a combination of lithium sulfide, diphosphorus pentasulfide, a lithium halide, and an elemental halogen, and among them, a combination of lithium sulfide, diphosphorus pentasulfide, and a lithium halide is preferred.

In this embodiment, one of the compounds mentioned above can be used alone or two or more thereof can be used in combination.

In this embodiment, a solid electrolyte containing a $PS_4$ structure or the like, such as $Li_3PS_4$, can be used as a raw material. By using a solid electrolyte, such as $Li_3PS_4$, as a raw material, the separation and loss of lithium sulfide ($Li_2S$), a phosphorus sulfide (for example, diphosphorus pentasulfide ($P_2S_5$)), and the like as described above can be suppressed, and since a reaction product, such as $Li_3PS_4$, can form a basic structure of a sulfide solid electrolyte, a sulfide solid electrolyte having an argyrodite-type crystal structure is liable to be obtained.

On the other hand, a solid electrolyte, such as $Li_3PS_4$, is to be produced by a conventionally present production method, such as a mechanical milling method, a slurry method, or a melt-quenching method, using lithium sulfide ($Li_2S$) and a phosphorus sulfide (for example, diphosphorus pentasulfide ($P_2S_5$)). Thus, the production efficiency of the production method of this embodiment is reduced in some cases. In the production method of this embodiment, as described above, by mixing the raw material-containing substance and the first solvent, a reaction product in which raw materials form a moderate bonding state with each other by any force (an intermolecular force, etc.) is obtained, which suppresses the separation and loss of the raw materials. In view of this fact, use of a reaction product, such as $Li_3PS_4$, as a raw material is not so highly required in the production method of this embodiment.

When lithium sulfide is used as a compound containing an alkali metal in this embodiment, the lithium sulfide is preferably particulate.

The average particle diameter ($D_{50}$) of the lithium sulfide particles is preferably 10 μm or more and 2000 μm or less, more preferably 30 μm or more and 1500 μm or less, and further preferably 50 μm or more and 1000 μm or less. In this description, the average particle diameter ($D_{50}$) is a particle diameter at which the integrated value from the side of the lowest particle diameter in a particle diameter distribution cumulative curve reaches 50% of the total integrated value, and the volume distribution is an average particle diameter that can be measured with, for example, a laser diffraction / scattering particle diameter distribution measurement apparatus. Among the raw materials mentioned above, solid raw materials preferably have an average particle diameter of the same degree as that of the lithium sulfide particles, that is, preferably have an average particle diameter within the same range as that for the lithium sulfide particles.

(Blending ratio of raw materials in raw material-containing substance)

When lithium sulfide and diphosphorus pentasulfide are used, the amount of lithium sulfide used based on the total amount of lithium sulfide and the phosphorus sulfide is preferably 65% by mole or more, more preferably 70% by mole or more, further preferably 76% by mole or more, and the upper limit is preferably 85% by mole or less, more preferably 80% by mole or less, further preferably 79% by mole or less.

When the amount of lithium sulfide used is within the above range, a sulfide solid electrolyte having an argyrodite-type crystal structure is liable to be obtained.

When lithium sulfide, diphosphorus pentasulfide, and a lithium halide, and another raw material used as needed are used, the content of lithium sulfide and diphosphorus pentasulfide based on the total thereof is preferably 45% by mole or more, more preferably 47% by mole or more, further preferably 50% by mole or more, and the upper limit is preferably 80% by mole or less, more preferably 65% by mole or less, further preferably 58% by mole or less.

When the content of lithium sulfide and diphosphorus pentasulfide is within the above range, a sulfide solid electrolyte having an argyrodite-type crystal structure is liable to be obtained.

When lithium chloride and lithium bromide are used in combination as the lithium halide, the proportion of lithium chloride based on the total of lithium chloride and lithium bromide is preferably 1 % by mole or more, more preferably 20% by mole or more, further preferably 40% by mole or more, furthermore preferably 50% by mole or more, and the upper limit is preferably 99% by mole or less, more preferably 90% by mole or less, further preferably 80% by mole or less, furthermore preferably 70% by mole or less.

When the proportion of lithium chloride is within the above range, a sulfide solid electrolyte having an argyrodite-type crystal structure is liable to be obtained.

(First solvent)

In the production method of this embodiment, as described above, two solvents, that is, the first solvent and the second solvent, are used.

As the first solvent, a solvent that has such a property that provides a mixture by being mixed with a raw material-containing substance, in other words, such a property that does not dissolve raw materials contained in the raw material-containing substance and a reaction product in which raw materials form a bonding state with each other is exemplified. As used herein, the "property that does not dissolve" does not mean a "property that strictly never dissolve" but tolerates some degree of dissolution. Specifically, the "property that does not dissolve" encompasses the case where the solubilities (at 25°C) of the raw materials and reaction product are less than 1 g/100 mL.

The first solvent is a solvent different from the second solvent described later, and is preferably a solvent that contains at least any one of an oxygen atom and a nitrogen atom. Specific preferred examples of the first solvent include at least one solvent containing an oxygen atom selected from an ether solvent, an ester solvent, an aldehyde solvent, and a ketone solvent; and at least one solvent containing a nitrogen atom selected from an amine solvent, an amide solvent, a nitro solvent, and a nitrile solvent.

Preferred examples of the solvent containing an oxygen atom include ether solvents, for example, aliphatic ethers, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; and aromatic ethers, such as methyl phenyl ether (anisole), ethyl phenyl ether, dibenzyl ether, and diphenyl ether

Preferred examples of the ester solvent include aliphatic esters, such as methyl formate, ethyl formate, methyl acetate, ethyl acetate, propyl acetate, isopropyl acetate, methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, butylbenzyl phthalate, dicyclohexyl phthalate, trimethyl trimellitate, and triethyl trimellitate.

Preferred examples of the aldehyde solvent include formaldehyde, acetaldehyde, and dimethylformamide, and preferred examples of the ketone solvent include acetone and methyl ethyl ketone.

Examples of the solvent containing a nitrogen atom include solvents having a group containing a nitrogen atom, such as an amino group, an amide group, a nitro group, or a nitrile group, that is, an amine solvent, an amide solvent, a nitro solvent, and a nitrile solvent.

Preferred examples of the amine solvent include aliphatic amines, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophorone diamine, piperazine, dipiperidylpropane, and dimethylpiperazine; and aromatic amines, such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Preferred examples of the amide solvent include dimethylformamide, diethylformamide, dimethylacetamide, methoxydimethylpropanamide, hexamethylphosphoric triamide, hexamethylphosphorous triamide, and N-methylpyrrolidone.

An example of the nitro solvent is a nitrobenzene. Preferred examples of the nitrile solvent include acetonitrile, methoxyacetonitrile, acrylonitrile, propionitrile, isobutyronitrile, methoxypropionitrile, and benzonitrile.

As the first solvent, among the above various solvents, an ether solvent, an ester solvent, and an amine solvent are preferred, and an ether solvent is more preferred. Among the ether solvents, an alicyclic ether is preferred, and tetrahydrofuran is particularly preferred.

The amount of the first solvent used relative to 100 g of the raw material-containing substance is preferably 100 mL or more, more preferably 200 mL or more, further preferably 350 mL or more, furthermore preferably 450 mL or more, and the upper limit is preferably 1000 mL or less, more preferably 850 mL or less, further preferably 700 mL or less, furthermore preferably 550 mL or less.

(Second solvent)

As the second solvent, a solvent having such a property that provides a solution that contains a solid electrolyte precursor by being mixed with the mixture obtained by mixing the raw material-containing substance and the first solvent, that is, such a property that dissolves a reaction product in which raw materials contained in the mixture form a bonding state with each other and further dissolves the solid electrolyte precursor is exemplified. Here, the "property that does not dissolve" specifically means that the solubilities (at 25°C) of the reaction product and the solid electrolyte precursor are 1 g/100 mL or more.

The second solvent is a solvent different from the first solvent as described above, and a specific preferred example is an alcohol solvent.

Examples of the alcohol solvent include primary and secondary aliphatic alcohols, such as methanol, ethanol, isopropanol, butanol, and 2-ethylhexyl alcohol; polyhydric alcohols, such as ethylene glycol, propylene glycol, butanediol, and hexanediol; alicyclic alcohols, such as cyclopentanol, cyclohexanol, and cyclopentylmethanol; aromatic alcohols, such as butylphenol, benzyl alcohol, phenethyl alcohol, naphthol, and diphenylmethanol; and alkoxy alcohols, such as methoxyethanol, propoxyethanol, and butoxyethanol.

As the second solvent, among the above various solvents, an aliphatic alcohol is preferred, a primary aliphatic alcohol is more preferred, methanol and ethanol are further preferred, and ethanol is particularly preferred.

The amount of the second solvent used relative to 100 g of the raw material-containing substance is preferably 200 mL or more, more preferably 400 mL or more, further preferably 700 mL or more, furthermore preferably 900 mL or more, and the upper limit is preferably 2000 mL or less, more preferably 1700 mL or less, further preferably 1400 mL or less, furthermore preferably 1100 mL or less.

(Other solvent)

In the production method of this embodiment, other solvents than the first solvent and second solvent can also be used. Examples of the other solvents include solvents not having a heteroatom, such as an oxygen atom and a nitrogen atom.

Examples of such solvents include hydrocarbon solvents, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane. Examples of the alicyclic hydrocarbon include cyclohexane and methylcyclohexane. Examples of the aromatic hydrocarbon solvent include benzene, toluene, xylene, mesitylene, ethylbenzene, and tert-butylbenzene.

When the other solvents are used, the solvent may be used in combination with the first solvent or may be used in combination with the second solvent.

The amount of the other solvents used is not particularly limited.

(Preparing a mixture)

In the production method of this embodiment, the mixture is prepared by mixing the raw material-containing substance and the first solvent.

In the mixture, as described above, a reaction product in which raw materials form a bonding state with each other by any force (an intermolecular force, a chemical bond, etc.), the first solvent, and raw materials as they are, are contained.

The mixing of the raw material-containing substance and the first solvent can be performed, for example, with a mixer or a stirrer. The mixing is also performed with a pulverizer. By using a pulverizer, the reaction is liable to proceed faster but the facility cost is elevated. In the production method of this embodiment, any one of a mixer, a stirrer, and a pulverizer can be used by taking the factors comprehensively into consideration.

In the production method of this embodiment, in view of the production efficiency, in particular, the facility cost, the mixing of the raw material-containing substance and the first solvent is preferably performed with an apparatus referred to as a mixer or a stirrer. In other words, the mixing of a solvent 1 and a raw material 1 can be performed by a treatment of stirring, mixing, or a combination thereof.

An example of the stirrer and mixer is a mechanically stirring-style mixer in which a stirring blade is provided in a mixing tank for stirring (mixing by stirring, which can be also referred to as stirring-mixing). Examples of the mechanically stirring-style mixer include a high-speed stirring-type mixer and a double arm-type mixer. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape. From the viewpoint of more efficiently promoting the reaction of the raw materials, a shovel shape, a flat blade shape, a C-type blade shape, an anchor shape, a paddle shape, and a full-zone shape are preferred, and an anchor shape, a paddle shape, and a full-zone shape are more preferred.

When a mechanically stirring-style mixer is used, the rotation number of the stirring blade can be appropriately controlled with no specific limitation depending on the volume and the temperature of the mixture in the mixing tank, the shape of the stirring blade, and the like, and can be generally approximately 5 rpm or more and 500 rpm or less. From the viewpoint of more efficiently preparing a solution, the rotation number is preferably 25 rpm or more, more preferably 50 rpm or more, further preferably 100 rpm or more, and the upper limit is preferably 450 rpm or less, more preferably 400 rpm or less, further preferably 350 rpm or less.

The temperature condition in mixing with a stirrer or a mixer is not particularly limited, and, for example, is generally -10 to 100°C, preferably 0 to 80°C, more preferably 10 to 70°C, and further preferably 20 to 60°C. The mixing time is generally 0.1 to 500 hours, and from the viewpoint of preparing a reaction product in a more efficient manner and in a larger amount, the mixing time is preferably 1 to 400 hours, more preferably 3 to 300 hours, further preferably 5 to 200 hours, and furthermore preferably 10 to 100 hours.

(Preparing a solution)

In the production method of this embodiment, a solution containing a solid electrolyte precursor can be prepared by mixing the above mixture and the second solvent.

The solution containing a solid electrolyte precursor contains the first solvent, the second solvent, and a solid electrolyte precursor, and the solid electrolyte precursor is present in a dissolved state.

The mixing of the mixture and the second solvent can be performed in the same manner as for the mixing of the raw material-containing substance and the first solvent, for example, with a mixer or a stirrer. The mixer or stirrer that can be used for mixing the mixture and the second solvent can be selected and adopted from those exemplified as a mixer or stirrer that can be used for mixing the raw material-containing substance and the first solvent.

The temperature condition in mixing with a stirrer or a mixer is not particularly limited, and, for example, is generally -10 to 100°C, preferably 0 to 80°C, more preferably 10 to 70°C, and further preferably 20 to 60°C. The mixing time is generally 1 minute to 100 hours, and from the viewpoint of preparing a solid electrolyte precursor in a more efficient manner and in a larger amount, the mixing time is preferably 3 minutes to 80 hours, more preferably 5 minutes to 50 hours, further preferably 10 minutes to 10 hours, and furthermore preferably 20 minutes to 1 hour.

(Drying)

The solution containing a solid electrolyte precursor may be dried before performing a heat treatment while supplying hydrogen sulfide as described later. In other words, the production method of this embodiment may include drying the solution containing a solid electrolyte precursor.

When the solution is dried to volatilize the first solvent and second solvent contained in the solution, hydrogen sulfide supplied in the heat treatment as described later and a solid component contained in the solution, in particular, a lithium alkoxide are liable to come in contact, and the reaction represented by the reaction formula (3) is liable to proceed and the lithium alkoxide is liable to be converted to lithium sulfide. Then, deterioration in the quality, such as a reduction in the ionic conductivity, can be efficiently suppressed, and a high-quality sulfide solid electrolyte can be produced.

The drying can be performed at a temperature according to the type of the first solvent and second solvent used in the mixing. For example, the drying can be performed at a temperature equal to or higher than the boiling points of the first solvent and second solvent.

Regarding the drying conditions, the drying temperature cannot be unconditionally defined because it varies depending the pressure condition in drying and the boiling points of the first solvent and second solvent, but is generally 5°C or higher and lower than 200°C, preferably 20°C to 190°C, more preferably 35 to 175°C, further preferably 50 to 160°C. The pressure condition can be a normal pressure or an increased pressure, but the drying is preferably performed under a reduced pressure with a vacuum pump or the like (vacuum drying). The drying time is generally 1 minute to 10 hours, preferably 10 minutes to 8 hours, more preferably 30 minutes to 6 hours, further preferably 1 hour to 5 hours.

(Performing a heat treatment while supplying hydrogen sulfide to produce a heated solid electrolyte precursor)

The production method of this embodiment includes subjecting the solid electrolyte precursor to a heat treatment while supplying hydrogen sulfide to produce a heated solid electrolyte precursor. By performing a heat treatment while supplying hydrogen sulfide, an impurity, such as a lithium alkoxide, that can be produced as a reaction product of, for example, lithium sulfide and the second solvent, contained in the solution can be converted to lithium sulfide. Next, by firing the resulting heated solid electrolyte precursor, an argyrodite-type crystal structure is formed, and the crystallinity thereof is enhanced, resulting in production of a high-quality sulfide solid electrolyte having an argyrodite-type crystal structure.

When the drying is not performed, the first solvent and second solvent contained in the solution can be removed.

The heat treatment is performed while supplying hydrogen sulfide.

In the supplying hydrogen sulfide, only hydrogen sulfide may be supplied or hydrogen sulfide diluted with an inert gas, such as nitrogen gas or argon gas, may be supplied. When hydrogen sulfide is diluted with an inert gas before supplying it, the content of the hydrogen sulfide is preferably 5% by volume or more, more preferably 10% by volume or more, further preferably 20% by volume or more. The upper limit is less than 100% by volume, preferably 90% by volume or less, more preferably 80% by volume or less, further preferably 70% by volume or less.

The heating temperature by the heat treatment cannot be unconditionally defined because it varies depending on the kinds of the first solvent and second solvent, but is preferably a temperature lower than the temperature in firing described later, and is generally preferably 200°C or higher, more preferably 250°C or higher, further preferably 350°C or higher, furthermore preferably 400°C or higher, and the upper limit is preferably selected from the temperature range of 700°C or lower, more preferably 600°C or lower, further preferably 500°C or lower, furthermore preferably 450°C or lower.

The time for the heat treatment is generally 1 minute to 10 hours, preferably 10 minutes to 8 hours, more preferably 30 minutes to 6 hours, further preferably 30 minutes to 2 hours.

The heating temperature in the heat treatment can be held constant, or a temperature rising or a temperature lowering may be applied or the both may be combined.

For example, the heat treatment can be performed by placing the solid electrolyte precursor in a furnace of a room temperature (23°C) and increasing the temperature in the furnace to a firing temperature described later, or a heat treatment can be performed by placing the solid electrolyte precursor in a furnace set to a prescribed heating temperature.

The amount of hydrogen sulfide supplied relative to 100 g of the raw material-containing substance is preferably 0.01 $Nm^3$/h or more, more preferably 0.03 $Nm^3$/h or more, further preferably 0.05 $Nm^3$/h or more, furthermore preferably 0.08 $Nm^3$/h or more, and the upper limit is preferably 1.0 $Nm^3$/h or less, more preferably 0.8 $Nm^3$/h or less, further preferably 0.6 $Nm^3$/h or less, furthermore preferably 0.4 $Nm^3$/h or less. When hydrogen sulfide is diluted with an inert gas before supplying it, hydrogen sulfide is supplied so that the amount of hydrogen sulfide supplied is within the above range.

(Firing the heated solid electrolyte precursor)

The production method of this embodiment includes firing the heated solid electrolyte precursor. By firing the heated solid electrolyte precursor, an argyrodite-type crystal structure is formed and the crystallinity is enhanced, and thus a high-quality sulfide solid electrolyte having an argyrodite-type crystal structure is obtained.

The heating temperature by firing cannot be unconditionally defined because it varies depending on the kinds of the first solvent and second solvent, but is preferably a temperature higher than the heating temperature in the heat treatment, and is generally preferably 200°C or higher, more preferably 250°C or higher, further preferably 350°C or higher, furthermore preferably 400°C or higher, and the upper limit can preferably be selected from the temperature range of 700°C or lower, more preferably 600°C or lower, further preferably 500°C or lower, furthermore preferably 450°C or lower.

The firing temperature means the highest temperature in firing.

The time for firing is generally 1 minute to 10 hours, preferably 10 minutes to 8 hours, more preferably 30 minutes to 6 hours, further preferably 1 hour to 5 hours. The time for firing means the time during which the heating temperature by firing is kept. In the production method of this embodiment, in firing, a constant temperature is preferably kept during the time for firing.

The method of firing is not particularly limited, but examples thereof include methods using a vacuum heating apparatus, a firing furnace, or an autoclave. Industrially, a horizontal dryer, a horizontal vibrating fluid dryer, or the like having a heating means and a feeding mechanism can be used. The method can be selected depending on the amount to be treated by heating.

The firing can be performed, for example, by transferring the heated solid electrolyte precursor obtained by performing a heat treatment while supplying hydrogen sulfide into a firing apparatus. Firing can also be performed sequentially with the heat treatment. Firing can be performed while supplying hydrogen sulfide used in the heat treatment, or can be performed after stopping the supply of hydrogen sulfide.

Typical specific examples of the procedure of the heat treatment and firing include the following procedures (i) to (iii):

(i) placing the solid electrolyte precursor in a furnace of a room temperature (23°C), increasing the temperature in the furnace to a firing temperature while supplying hydrogen sulfide to perform a heat treatment, followed by firing at the firing temperature while supplying hydrogen sulfide or after stopping the supply of hydrogen sulfide,

(ii) placing the solid electrolyte precursor in a furnace set to a prescribed heating temperature and performing a heat treatment while supplying hydrogen sulfide to produce a heated solid electrolyte precursor, and then placing the heated solid electrolyte precursor in a furnace set to a firing temperature, followed by firing while supplying hydrogen sulfide or without supplying hydrogen sulfide,

(iii) placing the solid electrolyte precursor in a furnace set to a prescribed heating temperature, and performing a heat treatment while supplying hydrogen sulfide, followed by firing while increasing the temperature from the heating temperature to a firing temperature and while supplying hydrogen sulfide or after stopping the supply of hydrogen sulfide.

(Sulfide solid electrolyte)

The sulfide solid electrolyte obtained by the above production method is a sulfide solid electrolyte having an argyrodite-type crystal structure.

The argyrodite-type crystal structure is a structure basically having an $Li_7PS_6$ structure backbone and obtained by replacing a part of P with Si. For example, the crystal structures represented by the compositional formulae $Li_{7-x}P_{1-y}Si_yS_6$ and $Li_{7+x}P_{1-y}Si_yS_6$ (x is -0.6 to 0.6, y is 0.1 to 0.6) are a cubic crystal or an orthorhombic crystal, preferably a cubic crystal, and give peaks appearing mainly at positions of $2\theta=15.5°$, 18.0°, 25.0°, 30.0°, 31.4°, 45.3°, 47.0°, and 52.0° in the X-ray diffractometry using a CuK$\alpha$ line.

The crystal structure represented by the compositional formula $Li_{7-x-2y}PS_{6-x-y}Cl_x$ ($0.8 \leq x \leq 1.7$, $0 < y \leq -0.25x+0.5$) is preferably a cubic crystal, and gives peaks appearing mainly at positions of $2\theta=15.5°$, 18.0°, 25.0°, 30.0°, 31.4°, 45.3°, 47.0°, and 52.0° in the X-ray diffractometry using a CuK$\alpha$ line. The crystal structure represented by the compositional formula $Li_{7-x}PS_{6-x}Ha_x$ (Ha is Cl or Br, x is preferably 0.2 to 1.8) is preferably a cubic crystal, and gives peaks appearing mainly at positions of $2\theta=15.5°$, 18.0°, 25.0°, 30.0°, 31.4°, 45.3°, 47.0°, and 52.0° in the X-ray diffractometry using a CuK$\alpha$ line.

The positions of the peaks may vary within the range of $\pm 0.5°$.

The shape of the sulfide solid electrolyte having an argyrodite-type crystal structure obtained by the production method of this embodiment is not particularly limited, and an example thereof is particulate. The average particle diameter ($D_{50}$) of the particulate crystalline sulfide solid electrolyte can be, for example, within the range of 0.01 $\mu$m to 500 $\mu$m or 0.1 to 200 $\mu$m.

(Application)

As described above, a sulfide solid electrolyte having an argyrodite-type crystal structure obtained by the method for producing a sulfide solid electrolyte of this embodiment is a high-quality sulfide solid electrolyte having a small amount of impurities and having a high ionic conductivity. Accordingly, the sulfide solid electrolyte has a superior battery performance, and thus, can be suitably used in a battery.

A sulfide solid electrolyte obtained by the method for producing a sulfide solid electrolyte of this embodiment may be used in a positive electrode layer or a negative electrode layer, or may be used in an electrolyte layer. The layers can be produced by a known method.

In the battery, besides a positive electrode layer, an electrolyte layer, and a negative electrode layer, a collector is preferably used, and as the collector, a known collector can be used. For example, a layer in which a substance that reacts with the solid electrolyte, such as Au, Pt, Al, Ti, or Cu, is coated with Au or the like can be used.

Examples

Next, the present invention will be specifically described with reference to examples. The present invention is in no way limited by the examples.

(Measurement of ionic conductivity)

In Examples herein, the ionic conductivity was measured as follows.

A powder of each sulfide solid electrolyte obtained in Examples and Comparative Example was molded into a circular palette having a diameter of 6 to 10 mm (sectional area S: 0.283 to 0.785 cm$^2$) and a height (L) of 0.1 to 0.3 cm to prepare a specimen. Electrode terminals were attached to the specimen from above and below, and measurement was performed by an alternating current impedance method at 25°C (frequency range: 1 MHz to 0.1 Hz, amplitude: 10 mV) to give a Cole-Cole plot. The real part Z' ($\Omega$) at the point at which - Z" ($\Omega$) became the minimum near the right end of an arc observed in a region on the high frequency side was designated as the bulk resistance R ($\Omega$) of the electrolyte, and the ionic conductivity $\sigma$ (S/cm) was calculated according to the following expressions.

$$R = \rho(L/S)$$

$$\sigma = 1/\rho$$

(Powdery X-ray diffractometry)

In Examples herein, the powdery X-ray diffractometry (XRD) was performed as follows.

Each powder obtained in Examples and Comparative Example was charged into a hole having a diameter of 20 mm and a depth of 0.2 mm and was floated with a glass to prepare a specimen. This specimen was subjected to measurement using an airtight sample stage sealed with a Kapton film without contact with air under the following conditions.

Measurement apparatus: MiniFlex, manufactured by Rigaku Corporation

Tube voltage: 40 kV
Tube current: 150 mA
X-ray wavelength: Cu-K$\alpha$ line (1.5418 Å)
Optical system: focusing method
Slit configuration: solar slit 2.5°, divergence slit 0.625°, use of K$\beta$ filter (Ni plate)
Detector: semiconductor detector
Measurement range: 2θ = 10-60 deg
Step width, scan speed: 2.5 deg, 0.02 deg/sec

Example 1

Into a round-bottomed flask (volume: 100 mL), under argon atmosphere, 0.597 g (0.0127 mol) of lithium sulfide, 0.759 g (0.0034 mol) of diphosphorus pentasulfide, 0.289 g (0.0068 mol) of lithium chloride (LiCl), and 0.356 g (0.0041 mol) of lithium bromide (LiBr) were introduced as a raw material-containing substance. A stirring bar was introduced, and with stirring by a stirrer, 10 mL of tetrahydrofuran was added as the first solvent, and mixing was performed at a room temperature (23°C) for 12 hours (rotation number: 300 rpm) to obtain a mixture containing the raw material-containing substance, a reaction product (containing Li$_3$PS$_4$), and the first solvent (tetrahydrofuran).

Subsequently, 20 mL of ethanol was supplied as the second solvent, and mixing was performed at a room temperature (23°C) for further 5 minutes to prepare a solution containing a solid electrolyte precursor.

The obtained solution was subjected to drying under vacuum at 150°C for 2 hours to obtain the solid electrolyte precursor. The obtained solid electrolyte precursor was placed in an alumina boat, and subjected to a heat treatment in which the temperature was increased from a room temperature (23°C) to 430°C at a temperature rising rate of 5°C/min while supplying hydrogen sulfide at a flow rate of 100 cc/min. Then, firing was performed at 430°C for 2 hours while supplying hydrogen sulfide under the same conditions, and then, the temperature was decreased to a room temperature. The obtained sulfide solid electrolyte was a white powder.

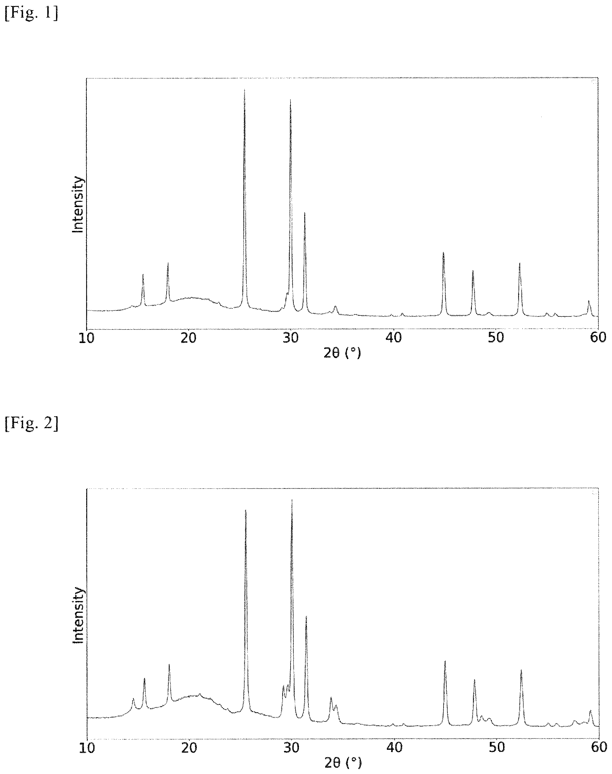

The obtained sulfide solid electrolyte was subjected to powdery XRD diffractometry. The result is shown in Fig. 1. The ionic conductivity was measured and the ionic conductivity was 5.9 mS/cm.

Example 2

In Example 1, the heat treatment was performed at a heating temperature of 250°C for 1.5 hours, the powder obtained after the heat treatment was transferred into a sealed container, and firing was performed at 430°C for 2 hours without suppling hydrogen sulfide, followed by decreasing the temperature to a room temperature, thereby obtaining a sulfide solid electrolyte. The obtained sulfide solid electrolyte was a white powder.

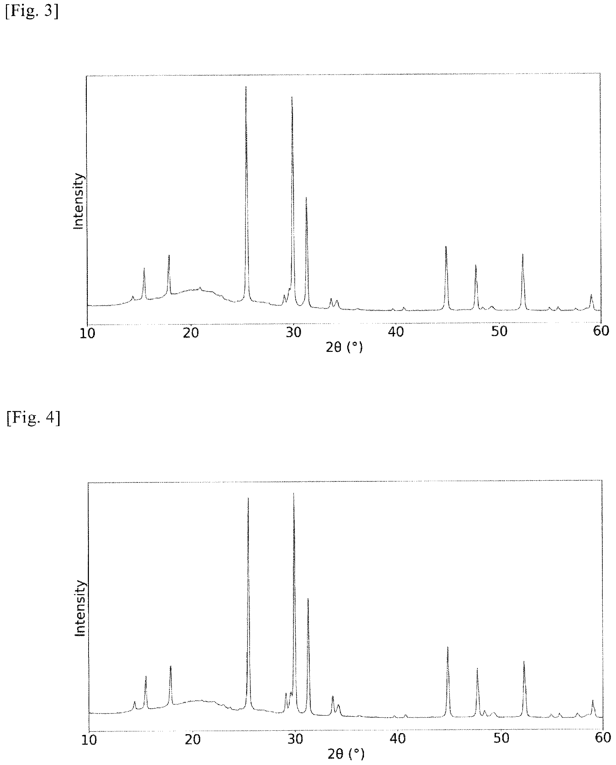

The obtained sulfide solid electrolyte was subjected to powdery XRD diffractometry. The result is shown in Fig. 3. The ionic conductivity was measured. The result is shown in Table 1.

Example 3

In Example 1, the heat treatment was performed at a heating temperature of 300°C for 1.5 hours, the powder obtained after the heat treatment was transferred into a sealed container, and firing was performed at 430°C for 2 hours without suppling hydrogen sulfide, followed by decreasing the temperature to a room temperature, thereby obtaining a sulfide solid electrolyte. The obtained sulfide solid electrolyte was a white powder.

The obtained sulfide solid electrolyte was subjected to powdery XRD diffractometry. The result is shown in Fig. 4. The ionic conductivity was measured. The result is shown in Table 1.

Comparative Example 1

A sulfide solid electrolyte was obtained in the same manner as in Example 1 except for changing hydrogen sulfide in the heat treatment and the firing to nitrogen gas. The obtained sulfide solid electrolyte was a black powder.

The obtained sulfide solid electrolyte was subjected to powdery XRD diffractometry. The result is shown in Fig. 2. The ionic conductivity was measured. The result is shown in Table 1.

Table 1

| | | Example | | | Comparative Example |
|---|---|---|---|---|---|
| | | 1 | 2 | 3 | 1 |
| First solvent | - | tetrahydrofuran | tetrahydrofuran | tetrahydrofuran | tetrahydrofuran |
| Second solvent | - | ethanol | ethanol | ethanol | ethanol |
| Hydrogen sulfide in heat treatment | - | used | used | used | not used |
| Heating temperature by heat treatment | °C | *1 | 250 | 300 | *1 |
| Hydrogen sulfide in firing | - | used | not used | not used | not used |
| Heating temperature by firing | °C | 430 | 430 | 430 | 430 |
| Firing time | hours | 2 | 2 | 2 | 2 |
| Ionic conductivity | mS/cm | 5.9 | 4.4 | 3.2 | 2.7 |
| Form | - | white powder | white powder | white powder | black powder |
| * 1: Since the heat treatment and firing were sequentially performed, a temperature lower than the firing temperature applies. | | | | | |

It was found from the results of Examples 1 to 3 that a sulfide solid electrolyte produced according to the production method of this embodiment was a high-quality sulfide solid electrolyte that was a white powder and exhibited a high ionic conductivity. As shown in the X-ray diffraction spectrum of Fig. 1, the sulfide solid electrolyte obtained in Example 1 had peaks at $2\theta=15.5°$, $18.0°$, $25.0°$, $30.0°$, $31.4°$, $45.3°$, $47.0°$, and $52.0°$, and thus, it was found that the sulfide solid electrolyte was a sulfide solid electrolyte having an argyrodite-type crystal structure.

On the other hand, since the sulfide solid electrolyte of Comparative Example 1 in which the heat treatment was performed without supplying hydrogen sulfide was a black powder, it is considered that the sulfide solid electrolyte contained carbides of impurities (for example, lithium ethoxide, etc.) which were contained in the solid electrolyte precursor before the heat treatment, resulting in a lower ionic conductivity as compared with those of Examples. According to the X-ray diffraction spectrum of Fig. 2, typical peaks of the argyrodite-type crystal structure were found as in the spectrum of Example 1, and in addition, there were two peaks found at $2\theta=22.2°$ and $23.3°$ which were not found in Example 1. These peaks are assumed to be attributable to impurities (for example, formed due to lithium ethoxide).

It is found from Example 1 that, by sequentially performing a heat treatment and firing while supplying hydrogen sulfide, a high-quality sulfide solid electrolyte that is a white powder and exhibits a higher ionic conductivity as compared with the sulfide solid electrolyte of Comparative Example 1 is produced. In addition, also by Examples 2 and 3 in which a heat treatment was performed while supplying hydrogen sulfide and then, firing was performed without supplying hydrogen sulfide, a high-quality sulfide solid electrolyte which is a white powder and exhibits a higher ionic conductivity as compared with the sulfide solid electrolyte of Comparative Example 1 is produced. As described above, it is found from the results of Examples and Comparative Example that a high-quality sulfide solid electrolyte having an enhanced ionic conductivity and containing no impurities can be obtained as long as a heat treatment is performed while supplying hydrogen sulfide according to the production method of this embodiment.

In the sulfide solid electrolytes obtained in Examples 2 and 3, since the same raw materials as in Example 1 are used and the firing temperature is also the same and the ionic conductivity is as high as 4.4 mS/cm and 3.2 mS/cm, the sulfide solid electrolytes have an argyrodite-type crystal structure as in Example 1. This can be confirmed from Figs. 3 and 4.

Industrial Applicability

According to the production method of this embodiment, it is possible to efficiently produce a high-quality sulfide solid electrolyte that contains a small amount of impurities and has a high ionic conductivity. The obtained sulfide solid electrolyte can be suitably used for a battery, in particular, a battery for use in information-related instruments, communication instruments, and so on, such as personal computers, video cameras, and mobile phones.

**Claims**

1.

A method for producing a sulfide solid electrolyte having an argyrodite-type crystal structure, the method comprising
mixing a raw material-containing substance and a first solvent to prepare a mixture, mixing the mixture and a second solvent to prepare a solution containing a solid electrolyte precursor,
subjecting the solid electrolyte precursor to a heat treatment while supplying hydrogen sulfide to produce a heated solid electrolyte precursor, and
firing the heated solid electrolyte precursor.

2. The method for producing a sulfide solid electrolyte having an argyrodite-type crystal structure according to claim 1, wherein the second solvent is an alcohol solvent.

3. The method for producing a sulfide solid electrolyte having an argyrodite-type crystal structure according to claim 1 or 2, wherein the first solvent is a solvent that is different from the second solvent and that contains at least any one of an oxygen atom and a nitrogen atom.

4. The method for producing a sulfide solid electrolyte having an argyrodite-type crystal structure according to claim 3, wherein the first solvent is at least one solvent containing an oxygen atom selected from an ester solvent, an ether solvent, an aldehyde solvent, and a ketone solvent.

5. The method for producing a sulfide solid electrolyte having an argyrodite-type crystal structure according to claim 3 or 4, wherein the first solvent is at least one solvent containing a nitrogen atom selected from an amine solvent, an amide solvent, a nitro solvent, and a nitrile solvent.

6.  The method for producing a sulfide solid electrolyte having an argyrodite-type crystal structure according to any one of claims 1 to 5, wherein the heat treatment is performed at 200°C or higher.

7.  The method for producing a sulfide solid electrolyte having an argyrodite-type crystal structure according to any one of claims 1 to 6, wherein the raw material-containing substance and the first solvent are mixed by using a mixer or a stirrer.

8.  The method for producing a sulfide solid electrolyte having an argyrodite-type crystal structure according to any one of claims 1 to 7, wherein the mixture and the second solvent are mixed by using a mixer or a stirrer.

9.  The method for producing a sulfide solid electrolyte having an argyrodite-type crystal structure according to any one of claims 1 to 8, wherein the mixture comprises a reaction product of the raw material-containing substance.

10. The method for producing a sulfide solid electrolyte having an argyrodite-type crystal structure according to any one of claims 1 to 9, wherein the raw material-containing substance comprises lithium sulfide.

11. The method for producing a sulfide solid electrolyte having an argyrodite-type crystal structure according to any one of claims 1 to 10, wherein the raw material-containing substance comprises a phosphorus sulfide.

12. The method for producing a sulfide solid electrolyte having an argyrodite-type crystal structure according to any one of claims 1 to 11, wherein the raw material-containing substance comprises a lithium halide selected from lithium chloride and lithium bromide.

13. The method for producing a sulfide solid electrolyte having an argyrodite-type crystal structure according to any one of claims 1 to 12, wherein the first solvent is used in an amount of 100 mL or more and 1000 mL or less relative to 100 g of the raw material-containing substance.

14. The method for producing a sulfide solid electrolyte having an argyrodite-type crystal structure according to any one of claims 1 to 13, wherein the second solvent is used in an amount of 200 mL or more and 2000 mL or less relative to 100 g of the raw material-containing substance.

[Fig. 1]

[Fig. 2]

[Fig. 3]

[Fig. 4]

## INTERNATIONAL SEARCH REPORT

International application No.

**PCT/JP2022/047740**

### A. CLASSIFICATION OF SUBJECT MATTER

*H01B 13/00*(2006.01)i; *C01B 25/14*(2006.01)i; *C01D 15/00*(2006.01)i; *H01G 11/56*(2013.01)i; *H01M 10/0562*(2010.01)i
FI:  H01B13/00 Z; C01B25/14; C01D15/00; H01G11/56; H01M10/0562

According to International Patent Classification (IPC) or to both national classification and IPC

### B. FIELDS SEARCHED

Minimum documentation searched (classification system followed by classification symbols)

H01B13/00; C01B25/14; C01D15/00; H01G11/56; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-95953 A (IDEMITSU KOSAN CO., LTD.) 18 June 2020 (2020-06-18) paragraphs [0013]-[0076], fig. 1-7 | 1, 3-14 |
| A | | 2 |
| Y | JP 2019-169459 A (IDEMITSU KOSAN CO., LTD.) 03 October 2019 (2019-10-03) paragraphs [0050], [0051] | 1, 3-14 |
| A | WO 2020/153973 A1 (SOLID POWER, INC.) 30 July 2020 (2020-07-30) entire text, all drawings | 1-14 |
| A | JP 2020-196640 A (SAMSUNG ELECTRONICS CO., LTD.) 10 December 2020 (2020-12-10) entire text, all drawings | 1-14 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/047740**

| Patent document cited in search report | | | Publication date (day/month/year) | Patent family member(s) | | | Publication date (day/month/year) |
|---|---|---|---|---|---|---|---|
| JP | 2020-95953 | A | 18 June 2020 | US | 2020/0185767 | A1 | |
| | | | | paragraphs [0030]-[0157], fig. 1-7 | | | |
| JP | 2019-169459 | A | 03 October 2019 | US | 2019/0074544 | A1 | |
| | | | | paragraphs [0094]-[0098] | | | |
| WO | 2020/153973 | A1 | 30 July 2020 | JP | 2022-513322 | A | |
| JP | 2020-196640 | A | 10 December 2020 | US | 2020/0381773 | A1 | |

Form PCT/ISA/210 (patent family annex) (January 2015)

EP 4 462 453 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018054709 A

- JP 2019169459 A